Europäisches Patentamt

European Patent Office

Office européen des brevets

(19)

(11) Publication number: **0 252 611 B1**

(12) # EUROPEAN PATENT SPECIFICATION

(45) Date of publication of patent specification: **10.04.91**  (51) Int. Cl.⁵: **B23Q 11/10**

(21) Application number: **87305117.1**

(22) Date of filing: **10.06.87**

(54) **Drilling device.**

(30) Priority: **11.06.86 JP 133814/86**
**11.06.86 JP 87836/86**

(43) Date of publication of application:
**13.01.88 Bulletin 88/02**

(45) Publication of the grant of the patent:
**10.04.91 Bulletin 91/15**

(84) Designated Contracting States:
**CH DE FR GB LI NL**

(56) References cited:
**BE-A- 852 189**  **DE-A- 2 912 396**
**DE-C- 929 930**  **FR-A- 1 231 378**
**JP-U-61 002 908**  **US-A- 2 496 830**
**US-A- 3 294 182**

(73) Proprietor: **NIKKEN TOOL CO., LTD.**
**150-1, Oaza-shimomabuse**
**Kadoma-shi Osaka-fu(JP)**

(72) Inventor: **Okinaga, Hiroaki**
**34-4, Sakuragaoka 3-chome Setagayaku**
**Tokyo(JP)**

(74) Representative: **Ben-Nathan, Laurence Albert**
**et al**
**Urquhart-Dykes & Lord 91 Wimpole Street**
**London W1M 8AH(GB)**

## Description

This invention relates to a drilling device used for drilling rigid materials such as concrete, and more particularly to a drilling device provided with a rotating drive means having a hollow rotating shaft joined in alignment to a hollow drilling bit so as to conduct fluid through a passage formed in the rotating shaft and drilling bit.

When a decorative panel or the like is fixed onto, for example, a concrete wall of a building, gererally, it is necessary to drill holes in the concrete wall and fit anchor bolts into the holes so as to secure in position the decorative panel. To drill a small hole in a rigid material such as concrete, a twist drill having a cutting edge shaped like a crosscut chisel has been used so as to be attached to a chuck of a conventional drilling device and then vibrated longitudinally relative to the shank thereof while being rotated, thereby to bore the desired hole in the rigid material by impact-fracture force thus generated.

In the case of drilling the hole in the rigid material by use of the drilling device in an office, store, hotel or other places, people will experience a considerable nuisance from a harsh noise produced in drilling. The inventor of this invention has developed a rotary drill capable of boring a hole without being vibrated in the axial direction (Japanese Patent Application Disclosure SHO 61-146412 (A)). The improved drill as noted above is composed of a cutting edge made of baked metallic material including diamond grains and a shank having a fluid passage formed along the axis thereof so as to permit therethrough compressed air to be supplied to the cutting edge portion. By use of this drill, the drilling work can be performed without bringing about tremendous noises and vibrations. Besides, it is possible to increase the drilling efficiency and improve the durability of the cutting edge because the cutting edge is effectively cooled with the compressed air applied thereto through the passage in the hollow shank.

Also, there have been proposed drills of this type in Japanese Utility Model Application Disclosures SHO 60-87650(A), SNO 61-2908(A), and SHO 61-168904(A).

In these conventional drill devices using such a hollow drill, however, cooling fluid to be supplied to the cutting edge of the drill is conducted from a chuck portion located at the front portion of the body of the drilling device. Because of this, provision of a fluid conducting mechanism within the chuck adds to the size and complexity of the drilling device and renders the handling of the device difficult.

The object of this invention is to provide a drilling device using a hollow drilling bit, which is capable of effectively drilling a hole in a rigid material such as concrete with little vibration and noise, has a simple structure, and is easy to handle.

US-A-3,294,182 describes a drilling device in accordance with the preamble of Claim 1.

The invention provides a drilling device having the characterizing features of Claim 1.

By supplying compressed air from a conduit pipe connected to the rear end portion of the rotating shaft to a cutting edge disposed on the front end portion of the drilling bit through the passages in the rotating shaft and the drilling bit, the cutting edge which produces heat by friction with a rigid material in drilling can be effectively cooled, thereby increasing the efficiency of drilling and improving the durability of the cutting edge. Also, cutting chips produced as a result of drilling can be completely removed.

Following is a description by way of example only and with reference to the accompanying drawings of methods of carrying the invention into effect. In the drawings:-

Figure 1 is a schematic sectional view of one embodiment of the drilling device according to the present invention.

Figure 2 is a front view, with a part of the shank being cut out, of the drilling bit used in the present invention.

Figure 3 is a bottom view of the cutting edge of the drilling bit shown in Figure 2.

Figure 4 is a side view in section of the cutting edge of the same.

Figure 5 is a schematic side view in section of another embodiment of the drilling device according to the present invention.

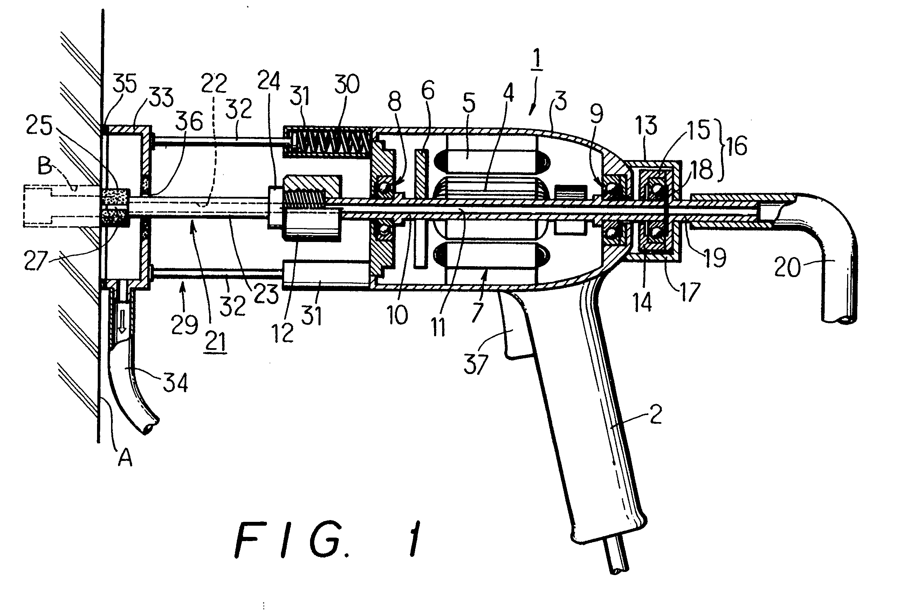

One embodiment of the drilling device according to this invention will now be described with reference to Figure 1.

The drilling device 1 of this invention comprises a casing 3 provided on its lower portion with a grip 2 and incorporating within the casing a motor 7 composed of a rotor 4, stator 5, cooling fan means 6 and so on. A rotating shaft 10 which penetrates the rotor 4 is rotatably supported by bearings 8 and 9 located at the front portion and rear portion of the casing 3. The rotating shaft 10 has a fluid passage 11 running from one end to the other end thereof as shaped like a hollow pipe. The rotating shaft 10 is provided on the one end portion thereof with a bit fixing means 12 such as a socket having female thread means. On the rear end portion of the shaft 10, there is disposed a rotary joint 13.

The rotary joint 13 is adapted to bring a fluid-feeding pipe into rotatable connection with the hollow rotary shaft 10. In this embodiment as illustrated, this rotary joint is composed of a case 14 and a ball bearing 16 having an outer ring 15 fixed inside the case 14. A gap between the case 14 and the ball bearing 16 is filled with grease. The case 14 is fixed within a holder 17 attached to the rear portion of the casing 3 and an inner ring 18 of the ball bearing 16, which can rotate freely, fixedly receives the rear portion of the rotating shaft 10 so as to permit the end opening of the shaft 10 to face a connecting means 19 which extends outward from the holder 17, thereby to communicate the fluid passage of the rotating shaft 10 and the passage in the connecting means 19 with each other. Therefore, by supplying compressed air into the pipe 20 which connects the connecting means 19 with a compressor (not shown), the compressed air is introduced into the fluid passage 11 of the shaft 10 through the rotary joint 13 and reaches the bit fixing means 12 located at the front end portion of the shaft 10.

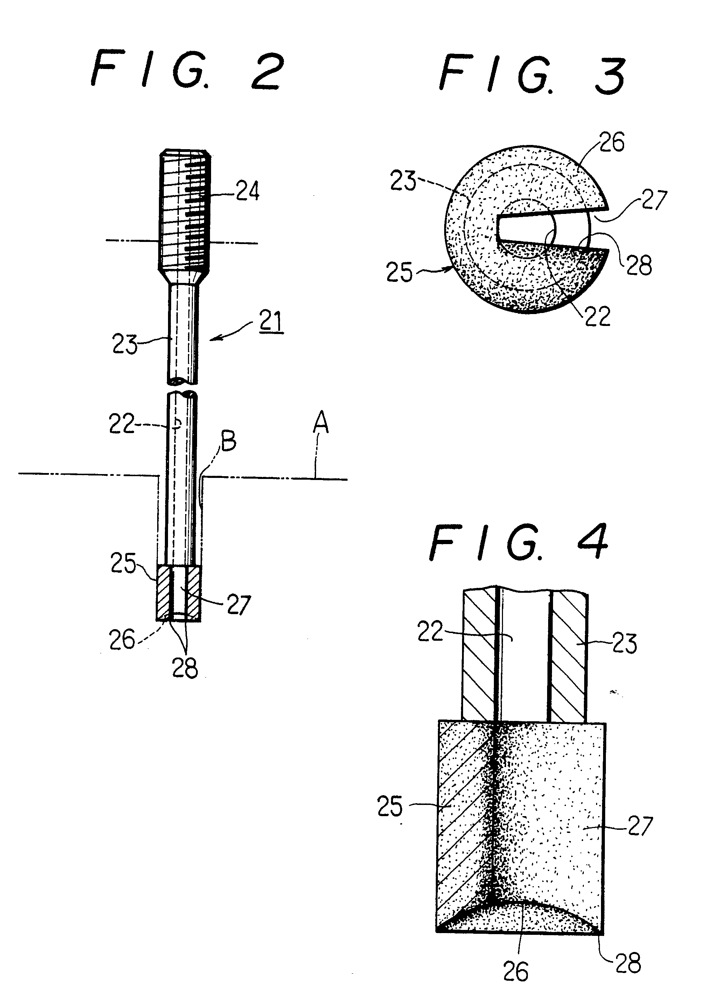

A drilling bit 21 to be attached to the bit fixing means 12 of the drilling device is, as shown in Figures 2 to 4, composed of a slender shank 23 having a through passage 22 along its axis and a male thread portion 24 disposed on the basal portion thereof, and a cylindrical cutting portion 25 disposed on the leading portion of the shank 23. The cutting portion 25 has a slit 27 which opens on the concave front surface 26 and the side surface thereof and is provided at the intersetion between the front surface 26 and the side surface thereof with a cutting edge 28. When the drilling bit 21 thus constructed is held in position by the bit fixing means 12 disposed on the shaft 10, the fluid passage 11 in the shaft 10 communicates with the through passage 22 in the drilling bit 21. The compressed air introduced into the fluid passage 11 in the shaft 10 is discharged from the slit 27 via the through passage 22, thereby to cool the cutting edge 28 which generates heat in drilling.

In the illustrated embodiment, it has a chip collector 29 for collecting concrete chips which are produced when drilling a hole in a concrete material, for instance. This chip collector 29 is composed of cylindrical members 31 each having a spring 30 incorporated therein which extend foward from the front portion of the casing 3, ejection rods 32 which expandably extend forward from the cylindrical members 31, a collecting cage 33 which opens forward and is mounted on the front end of the ejection rods 32, and a suction pipe 34 connected to the side wall of the collecting cage 33. The collecting cage 33 is provided on its front edge with an elastic pad 35 such as of sponge material and has an aperture 36 for permitting the drilling bit 21 to pass therethrough. It is preferable to seal the gap between the inner edge of the aperture 36 and the outer surface of the bit 21 with synthetic rubber or the like.

In the case that a concrete wall is drilled to bore a small hole therein with the drilling device having the structure noted above, first, the pipe 20 from the air compressor is connected to the connecting means 19, and the suction pipe 34 is connected to the collecting cage 33, as illustrated in Figure 1. Next, an operator grasps the grip 2 by one of his hands and holds the casing 3 by his other hand. Then, the collecting cage 33 is brought into contact with the concrete wall A which the leading edge of the drilling bit 21 is put in registration with a point to be bored on the concrete wall surface. Thereafter, the switch 37 disposed on the grip 2 is operated to be turned, with the result that the motor 7 is set in motion to rotate the drilling bit 21. Consequently, if the drilling bit 21 is pressed against the concrete wall A , in the state noted above, the rotating bit 21 effects to drill the concrete wall to make a desired hole. Because the drilling bit 21 is in alignment with the rotating shaft 10 of the motor 7, the force which is given to the drilling device 1 by the operator can be transmitted to the cutting edge of the drilling bit 21 without loss.

As a hole B is bored in the concrete wall A the cutting portion 25 advances into the concrete wall A little by little while generating heat due to intense friction between the cutting edge and the concrete material. However, the cutting portion 25 is cooled forcibly by the compressed air discharged through the slit 27, thereby to prevent the generation of an intense heat and lessen abrasion of the cutting edge 28. While the compressed air discharged from the slit 27 functions to cool the cutting portion 25, it flows outward from the hole B together with concrete chips produced in drilling. The concrete chips emitted from the hole B with the compressed air are drawn into the suction pipe 34 through the collecting cage 33. Thereafter, the concrete chips are collected by a sucking device (not shown) which is provided with filter means. Thus, an atmosphere of a working place is in no way contaminated by the concrete chips.

While the drilling bit 21 is being thrust into the concrete wall to deepen the hole B the ejection pins 32 enter into the cylinder members 31 against the springs 30. Thus, the collection cage 31 is constantly brought into intimate contact with the concrete wall A by the urged force of the springs 30. As a result, the concrete chips discharged out of the hole B are completely caught by the collecting cage 33.

Though the embodiment described above has a function of cooling the cutting portion 25 by use of the compressed air supplied from the air compressor and collecting the concrete chips produced in drilling by sucking force generated by a sucking means, such a compressor need not necessarily be used. That is to say, the cooling of the cutting portion 25 and the collection of the drilling chips can simultaneously be effected only by the sucking means. In this case, a suction pipe connected to the sucking means may be connected to the connecting means 19 so as to suck air in the fluid passage of the rotating shaft 10. When the drilling is effected in that state, the atmosphere around the slit 27 in the drilling bit 21 is reduced, and consequently, the air in the hole B is sucked up by the sucking means via the through passage 22 of the drilling bit 21. Thus, the air around the cutting edge 28 enters into the through passage 22, thereby to forcibly cool the cutting edge 28. At that time, concrete chips produced in drilling are sucked into the through passage 22 of the drilling bit 21 through the slit 27 together with the air pressure around the cutting portion which becomes negative by the sucking force applied within the fluid passage 11 in the rotating shaft. Then, the concrete chips are forcibly introduced into the sucking means through the fluid passage 11 of the rotating shaft 10. Accordingly, it is possible to prevent the deterioration of the cutting edge caused by frilling and collect effectively the concrete chips produced in drilling.

Though, in the illustrated embodiment, there is adopted the bit fixing means 12 of the type which is shaped in a socket having female thread means, this is not limited to such a configuration and structure. That is, in case that the drilling bit 21 is composed of a shank having a female thread portion to allow the bit to be coupled to the rotating shaft 10, the shaft 10 should be provided at its leading end portion with a male thread counterpart.

Further, between the rotating shaft 10 of the motor 7 and the bit fixing means 12, there may be interposed a torque limiter (not shown) for preventing the motor 7 from being overloaded.

As an alternative to supplying compressed air to the fluid passage in the rotating shaft, a liquid such as cutting oil may be used for cooling the cutting edge of the drilling bit.

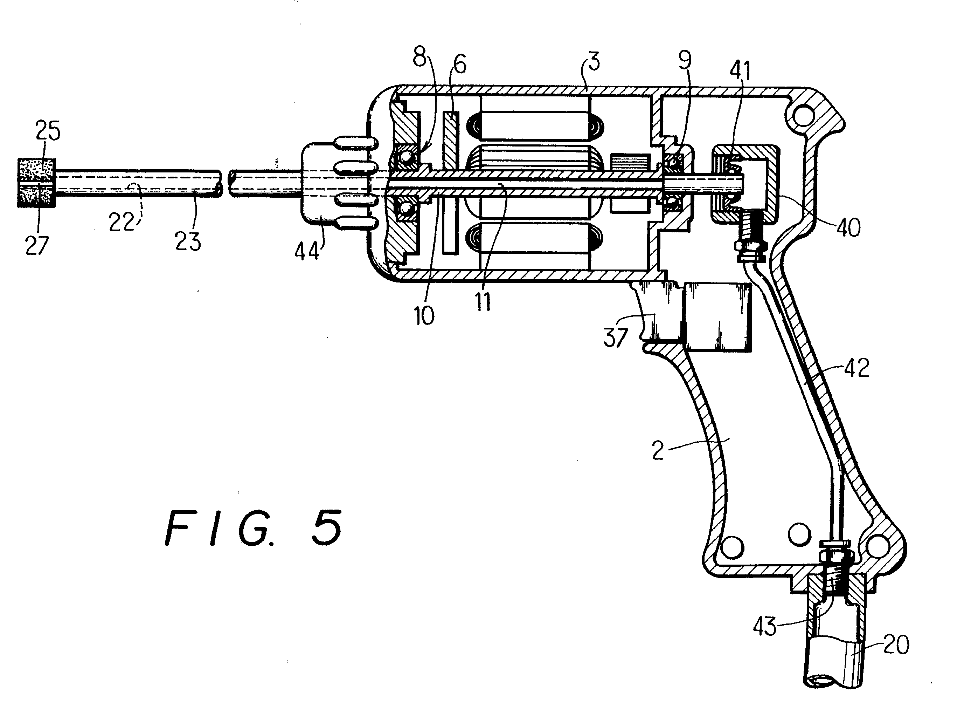

Furthermore, in the foregoing embodiment, the pipe 20 for conducting a fluid is connected to the rear portion of the drilling device, whereas it may be constructed so as to be connected to the lower end portion of the grip 2 as illustrated in Figure 5. That is, within the rear interior of the casing 3, there is mounted a fluid reservoir 40 so as to receive the lower end portion of the rotating shaft 10. Between the outer peripheral surface of the rotating shaft 10 and the opening portion of the fluid reservoir 40, there is disposed a resilient seal member 41 so as to seal the interior of the reservoir 40. A conduit 42 is connected at one end thereof to the reservoir 40 and at the other end thereof to a connecting means 43 fixed on the lower portion of the grip 2.

The pipe 20 which extends from a compressor or suction pump is detachably connected to the connecting means 43.

Thus, if the suction pump for example is operated to generate sucking force, air around the cutting portion 25 is drawn into the through passage 22 of the drilling bit 21 and flows to the pipe 20 along the fluid passage 11 in the rotating shaft 10, the fluid reservoir 40 and the conduit 42. Therefore, a drilling work is carried out with the drilling device having the aforementioned structure to bore a hole in a concrete material, for example, concrete chips produced in drilling can be sucked effectively into the through passage 22 together with the suction air, and simultaneously, the cutting portion 25 of the drilling bit 21 can be cooled.

Though this embodiment shows no chip collector as denoted by reference numeral 29 in the first embodiment, such a chip collector is provided on the drilling device similarly to the former embodiment.

Further, this embodiment has a bit fixing means 44 of a different type from that in the first embodiment. This bit fixing means 44 is integrally united with the body of the drilling device 1 and composed of a mechanical or electromagnetic chuck or the like. Namely, the type of the bit fixing means is not restricted in this invention. In the illustrated embodiment, the elements indicated by the same reference numerals as those in the first embodiment have analogous structures and functions to those of the first embodiment.

As has been described in the foregoing, according to this invention, the cutting edge of the drilling bit in drilling can be forcibly cooled effectively by supplying compressed air or suction air to the cutting portion. In case of the use of the compressed air, the air is introduced from the passage of the rotating shaft of the motor to the cutting portion through the passage in the drilling bit. The air discharged from the leading end of the drilling bit is collected with cutting chips produced as a result of drilling by means of the chip collector to which suction force is supplied. Thus, the cutting portion of the drilling bit which is heated due to friction can be prevented from seizing or galling prematurely. Therefore, it can maintain good drilling performance over a long time and enjoys reliable durability. The drilling device of the invention provides an advantageous drilling work involving little vibrations and noises.

This invention furthermore has an advantage that the drilling device enjoys not only high workability and controllability but also safety because the drilling bit is in alignment with the rotating shaft of the motor so as to allow the operator to readily urge the drilling bit toward a rigid material to be bored.

## Claims

1. A drilling device for drilling work by use of a drilling bit (21) having a through passage (22) along its axis, which comprises a casing (3), a rotating drive means provided within said casing (3) and having a rotating shaft (10) provided along its axis with a fluid passage (11), a bit fixing means (12) located at the leading end portion of the rotating shaft (10) and adapted to hold in position said drilling bit (21) being in alignment with said rotating shaft (10), and a fluid conducting pipe (20) detachably connected to said rotating shaft (10) and adapted to conduct a fluid from or to said fluid passage (11) in the rotating shaft (10), characterized in that said rotating shaft (10) extends through said drive means and said fluid conducting pipe (20) is connected to said rotating shaft (10) at a position on the opposite side of said drive means to said bit fixing means, and in that there is provided a chip collector (29) composed of ejection rods (32) which expandably extends forwardly from said casing (3), a chip collecting cage (33) disposed on the leading ends of said ejection rods (32) and a suction pipe (34) connected to said chip collecting cage (33) and adapted to supply sucking force to said collecting cage (33).

2. A drilling device according to Claim 1, wherein said rotating shaft (10) is rotatably supported by bearings (8,9) located within said casing (3).

3. A drilling device according to Claim 1, further comprising a connecting means (19) disposed at the rear portion of said casing (3) so as to permit said fluid conducting pipe (20) to be detachably connected thereto.

4. A drilling device according to Claim 1, wherein said casing (3) is provided with a grip (2) having on its free end portion a connecting means (43) which is in connection with said rotating shaft (10) and adapted to allow said fluid conducting pipe (20) to be detachably connected thereto.

5. A drilling device according to Claim 1, wherein said rotating drive means is an electric motor and operated by a switch (37) disposed on said casing (3).

## Revendications

1. Dispositif de forage pour effectuer un travail de forage en utilisant un trépan (21) traversé par un passage (22) le long de son axe, qui comprend un boîtier (3), un moyen d'entraînement rotatif disposé dans ledit boîtier (3) et ayant un arbre rotatif (10) muni le long de son axe d'un passage de fluide (11), un moyen de fixation de trépan (12) situé à l'extrémité avant de l'arbre rotatif (10) et adapté à maintenir en position ledit trépan (21), aligné avec ledit arbre rotatif (10), et une canalisation d'acheminement de fluide (20) reliée de manière amovible rotatif (10) et adaptée à acheminer un fluide en provenance dudit ou vers ledit passage de fluide (11) ménagé dans l'arbre rotatif (10), caractérisé en ce que ledit arbre rotatif (10) traverse ledit moyen d'entraînement et en ce que ladite canalisation d'acheminement de fluide (20) est reliée audit arbre rotatif (10) du côté dudit moyen d'entraînement opposé audit moyen de fixation de trépan, et en ce qu'on utilise un collecteur de copeaux (29) composé de tiges d'éjection (32) qui se prolongent de façon extensible vers l'avant dudit boîtier (3), une cage de recueil de copeaux (3) disposée sur les extrémités avant desdites tiges d'éjection (32) et une canalisation d'aspiration (34) reliée à ladite cage de recueil de copeaux (33) et adaptée à appliquer une force d'aspiration à ladite cage de recueil (33).

2. Dispositif de forage selon la revendication 1, dans lequel ledit arbre rotatif (10) est monté de façon à pouvoir tourner sur des roulements (8, 9) situés dans ledit boîtier (3).

3. Dispositif de forage selon la revendication 1, comprenant en outre un moyen de raccordement (19) disposé à l'arrière dudit boîtier (3) de façon à permettre d'y raccorder de façon amovible ladite canalisation d'acheminement de fluide (20).

4. Dispositif de forage selon la revendication 1, dans lequel ledit boîtier (3) est muni d'une poignée (2) ayant, à son extrémité libre, un moyen de raccordement (43) qui est relié audit arbre rotatif (10) et adapté à permettre d'y raccorder de façon amovible ladite canalisation d'acheminent de fluide (20).

5. Dispositif de forage selon la revendication 1, dans lequel ledit moyen d'entraînement rotatif est un moteur électrique activé par un commutateur (37) disposé sur ledit boîtier (3).

**Ansprüche**

1. Eine Bohrvorrichtung zum Bohren mit Hilfe eines Bohrers (21), der entlang seiner Achse einen durchgehenden Kanal (22) aufweist, umfassend ein Gehäuse (3), eine sich drehende Antriebseinrichtung, die in dem Gehäuse (3) angeordnet ist und eine sich drehende Welle (10) besitzt, die entlang ihrer Achse einen Flüssigkeitskanal (11) aufweist, eine Bohrerbefestigungseinrichtung (12), die im Bereich des vorderen Endes der sich drehenden Welle (10) liegt und den Bohrer (21), der mit der sich drehenden Welle (10) fluchtet, in seiner Position halten kann, und ein Flüssigkeitsleitungsrohr (20), das lösbar mit der sich drehenden Welle (10) verbunden ist und eine Flüssigkeit von oder zu dem Flüssigkeitskanal (11) in der sich drehenden Welle (10) leiten kann, dadurch gekennzeichnet, daß die sich drehende Welle (10) sich durch die Antriebseinrichtung hindurch erstreckt und das Flüssigkeitsleitungsrohr (20) mit der sich drehenden Welle (10) an einer Stelle auf der der Bohrerbefestigungseinrichtung gegenüberliegenden Seite der Antriebseinrichtung verbunden ist, und daß eine Spänefangeinrichtung (29) vorgesehen ist, die Auswurfstangen (23) aufweist, die sich von dem Gehäuse (3) weg nach vorne erstrecken, einen Spänefangkorb (33), der an den vorderen Enden der Auswurfstangen (32) angebracht ist, und ein Saugrohr (34), das mit dem Spänefangkorb (33) verbunden ist und zu dem Fangkorb (33) eine Saugkraft liefern kann.

2. Eine Bohrvorrichtung nach Anspruch 1, dadurch gekennzeichnet, daß die sich drehenden Welle (10) auf Lagern (8, 9) drehbar gelagert ist, die in dem Gehäuse (3) angeordnet sind.

3. Eine Bohrvorrichtung nach Anspruch 1, ferner umfassend eine Verbindungseinrichtung (19), die am rückwärtigen Teil des Gehäuses (3) so angeordnet ist, daß das Flüssigkeitsleitungsrohr (20) lösbar damit verbunden werden kann.

4. Eine Bohrvorrichtung nach Anspruch 1, dadurch gekennzeichnet, daß das Gehäuse (3) mit einem Griff (2) versehen ist, der an seinem freien Endstück eine Verbindungseinrichtung (43) aufweist, die mit der sich drehenden Welle (10) verbunden ist und geeignet ist, eine lösbare Verbindung mit dem Flüssigkeitsleitungsrohr (20) zu ermöglichen.

5. Eine Bohrvorrichtung nach Anspruch 1, dadurch gekennzeichnet, daß die sich drehende Antriebseinrichtung ein Elektromotor ist und über einen auf dem Gehäuse (3) angeordneten Schalter (37) in Betrieb gesetzt wird.

FIG. 1

EP 0 252 611 B1

# F I G. 2

# F I G. 3

# F I G. 4

FIG. 5